# EUROPEAN PATENT APPLICATION

(11) **EP 4 850 842 A1**
(43) Date of publication of application: **09.12.2026**
(21) Application number: 24922034.4
(22) Date of filing: 16.12.2024
(51) Int. Cl.: B23K 26/00, B23K 26/21

(54) **WELDING MACHINING PROGRAM SETTING DEVICE, WELDING MACHINING CONTROL DEVICE, AND WELDING MACHINING SYSTEM**

(30) Priority: 30.01.2024 JP 2024012072
(71) Applicant: Amada Co., Ltd., Isehara-shi, Kanagawa 259-1196 (JP)
(72) Inventor: HIWATASHI Keisuke, Isehara-shi, Kanagawa 259-1196 (JP); KENMOTSU Hideki, Isehara-shi, Kanagawa 259-1196 (JP); NAKAGAWA Daiki, Isehara-shi, Kanagawa 259-1196 (JP)
(74) Representative: Grünecker Patent- und Rechtsanwälte PartG mbB
(86) International application number: PCT/JP2024/044376
(87) International publication number: WO 2025/164116

(57) **Abstract**

The present invention includes a display unit configured to display a program creation condition setting screen for setting program creation conditions of a weld processing program that includes operation information of a welding robot configured to hold a welding torch of a welding machine, and weld processing conditions of the welding machine. The program creation condition setting screen is configured to display the operation information and to allow setting of the weld processing conditions. The operation information includes a movement path of the welding robot and a welding start position in the movement path. The welding start position includes at least first and second welding start positions. The program creation condition setting screen is configured to allow the weld processing conditions to be set for each of the first and second welding start positions.

## Description

### Technical Field

The present invention relates to a weld processing program setting device, a weld processing control device, and a weld processing system.

### Background Art

Conventionally, a welding device is known that includes a welding robot, a welding machine including a welding torch integrally provided at the tip end of the welding robot and an oscillator that generates laser beams, and a control device capable of controlling the welding robot based on a weld processing program (Patent Literature 1, etc.). In conventional welding devices, including the welding device described in Patent Literature 1, while the welding robot operates according to the weld processing program, the oscillator emits laser beam based on weld processing conditions set in the welding machine, and the laser beam emitted from the oscillator then moves from a welding torch held by the welding robot to respective welding portions of multiple workpieces for irradiation thereof so as to weld together the multiple workpieces.

### Citation List

### Patent Literature

Patent Literature 1: Japanese Patent Application Laid-Open Publication No. 2021-142571

### Summary

### Problems to be Solved by the Invention

However, in conventional welding devices, a control device controls only a welding robot and does not control a welding machine, which poses a problem that weld processing conditions cannot be changed during the execution of a weld processing program. Therefore, when the weld processing conditions differ depending on welding respective portions of multiple workpieces, a weld processing program must be created for each of the weld processing conditions, and the setting of the weld processing condition of the welding machine must be changed each time before execution of each weld processing program, resulting in poor work efficiency for an operator.

One aspect of the present invention relates to a weld processing program setting device, a weld processing control device, and a weld processing system that can change weld processing conditions during execution of a weld processing program.

### Solution to Problem

A weld processing program setting device according to one aspect of the present invention includes: a display unit configured to display a program creation condition setting screen for setting program creation conditions of a weld processing program that includes operation information of a welding robot configured to hold a welding torch of a welding machine; and weld processing conditions of the welding machine, wherein the program creation condition setting screen is configured to display the operation information and to allow setting of the weld processing conditions, the operation information includes a movement path of the welding robot and a welding start position in the movement path, the welding start position includes at least a first welding start position and a second welding start position, and the program creation condition setting screen is configured to allow the weld processing conditions to be set for each of the first welding start position and the second welding start position.

A weld processing control device according to one aspect of the present invention includes: a weld processing control unit configured to control at least the welding machine based on the weld processing program created based on the program creation conditions set by at least the weld processing program setting device, wherein the weld processing control unit is configured to change the settings of the weld processing conditions in the welding machine in accordance with the welding start position during execution of the weld processing program.

A weld processing system according to one aspect of the present invention includes: a program creation unit configured to create the weld processing program based on the program creation conditions set by at least the weld processing program setting device; a welding machine including a welding torch; a welding robot configured to hold the welding torch; and a weld processing control unit configured to control at least the welding machine based on the weld processing program created by the program creation unit, wherein the weld processing control unit is configured to change the settings of the weld processing conditions in the welding machine in accordance with the welding start position during execution of the weld processing program.

According to the weld processing program setting device, weld processing control device, and weld processing system of one aspect of the present invention, when setting the program creation conditions of the weld processing program, the weld processing conditions can be set for each of the first welding start position and the second welding start position, thereby enabling the weld processing conditions to be changed during execution of the weld processing program.

### Effect of the Invention

According to a weld processing program setting device, weld processing control device, and weld processing system of one aspect of the present invention, weld processing conditions can be changed during execution of the weld processing program.

### Brief Description of Drawings

[Figure 1] Figure 1 is a block diagram showing the configuration of a weld processing system according to the present embodiment.
[Figure 2] Figure 2 is a diagram showing a program creation condition setting screen.
[Figure 3] Figure 3 is a diagram showing a weld processing condition list screen.
[Figure 4] Figure 4 is a diagram showing a weld processing start screen.
[Figure 5] Figure 5 is a diagram showing a linear movement condition setting screen displayed when a "Line" icon is selected.
[Figure 6] Figure 6 is a diagram showing a spot irradiation condition setting screen displayed when a "spot" icon is selected.
[Figure 7] Figure 7 is a diagram showing a welding end condition setting screen displayed when an "off" icon is selected.
[Figure 8] Figure 8 is a flowchart showing an example of a weld processing process.

### Description of Embodiment

Hereinafter, a preferred embodiment for conducting the present invention will be described with reference to the drawings. Note that the following embodiment does not limit the invention according to the claims, and all combinations of the features described in the embodiment are not necessarily essential for the solution means of the invention. In the present embodiment, the scale and dimensions of each component may be exaggerated, or some components may be omitted.

### [Overall Configuration of Weld Processing System]

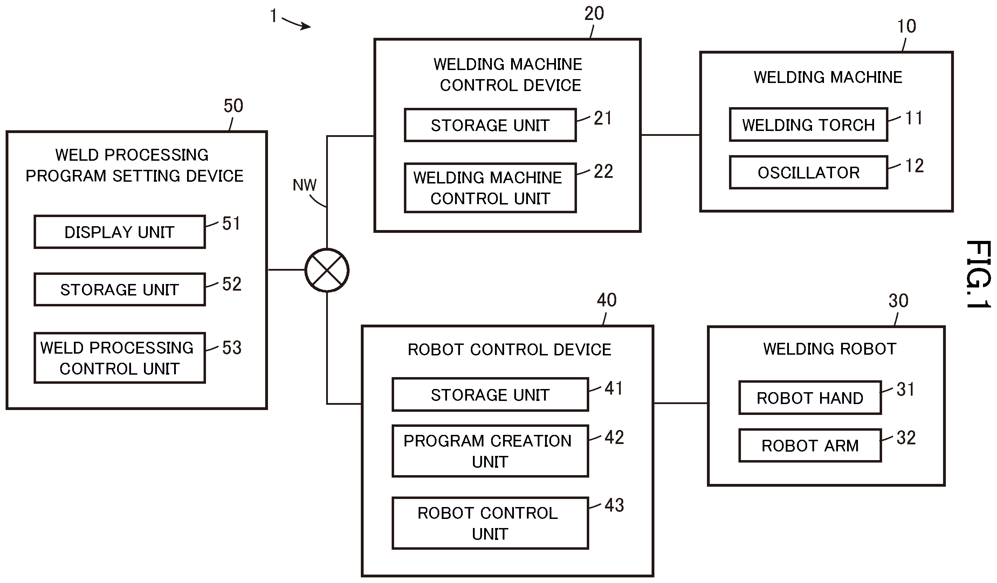

Figure 1 is a block diagram showing the configuration of a weld processing system according to the present embodiment.

The weld processing system according to the present embodiment is, for example, a weld processing system capable of welding a plurality of workpieces. Specifically, as illustrated in Figure 1, the weld processing system 1 includes a welding machine 10 including a welding torch 11, a welding machine control device 20 configured to control the welding machine 10, a welding robot 30 configured to hold the welding torch 11, a robot control device 40 configured to control the welding robot 30, and a weld processing program setting device 50 configured to set program creation conditions for a weld processing program. In the present embodiment, the welding machine control device 20 and the weld processing program setting device 50 are configured to communicate with each other via a communication network NW, as are the robot control device 40 and the weld processing program setting device 50.

### [Configuration of Welding Machine]

As illustrated in Figure 1, the welding machine 10 includes the welding torch 11 configured to irradiate welding portions of a plurality of workpieces with laser beams, and an oscillator 12 configured to emit laser beams based on weld processing conditions. The welding torch 11 is a handheld torch that can be grasped by the welding robot 30. In the present embodiment, the welding torch 11 and the oscillator 12 are connected to each other via a cable (not shown). Therefore, the laser beams emitted from the oscillator 12 are supplied to the welding torch 11 via the cable. The welding torch 11 and the oscillator 12 can adopt known configurations; thus, detailed descriptions are omitted.

### [Configuration of Welding Machine Control Device]

As illustrated in Figure 1, the welding machine control device 20 includes a storage unit 21 (welding machine storage unit) that stores predetermined weld processing conditions, and a welding machine control unit 22 configured to control the welding machine 10 based on an instruction acquired from the weld processing program setting device 50. The predetermined weld processing conditions stored in the storage unit 21 are standard weld processing conditions in weld processing. In addition, operation steps that the welding machine control unit 22 can execute (the configuration of the welding machine control unit 22) will be described later.

The welding machine control device 20 according to the present embodiment may be arranged independently of the welding machine 10 or may be housed inside a housing (not shown) of the welding machine 10 together with the oscillator 12.

### [Configuration of Welding Robot]

As illustrated in Figure 1, the welding robot 30 includes a robot hand 31 configured to hold the welding torch 11, and an articulated robot arm 32 capable of moving the robot hand 31 to a predetermined position. The robot hand 31 is configured to detachably grasp the welding torch 11 that is provided as a separate component. Note that the robot hand 31 and robot arm 32 can adopt known configurations; thus, detailed descriptions are omitted.

### [Configuration of Robot Control Device]

As illustrated in Figure 1, the robot control device 40 includes a storage unit 41 (robot storage unit) that stores operation information of the welding robot 30, a program creation unit 42 configured to create a weld processing program based on the program creation conditions set by the weld processing program setting device 50, and a robot control unit 43 configured to control the welding robot 30 based on the weld processing program created by the program creation unit 42.

The storage unit 41 is configured to store operation information taught to the welding robot 30 through teaching (for example, direct teaching). Specifically, the storage unit 41 is configured to store a movement path of the welding robot 30 as operation information, a movement mode for the welding robot 30, a welding start position and welding end position in the movement path, and a welding mode for the welding portions of the plurality of workpieces.

The "movement path" refers to information indicating a movement process from a movement start position of the robot hand 31 of the welding robot 30 to a movement end position. In the present embodiment, the storage unit 41 is configured to store, as the movement path, the movement start position of the robot hand 31, one or more movement reference positions of the robot hand 31, and the movement end position of the robot hand 31 (last movement reference position). The "movement reference position" refers to information indicating a position serving as an indicator for the movement of the robot hand 31. For example, if the storage unit 41 stores a first movement reference position and a second movement reference position as movement reference positions, the robot hand 31 first moves from the movement start position toward the first movement reference position, then moves from the first movement reference position toward the second movement reference position, and ends its movement at the second movement reference position (movement end position).

The number of movement reference positions may be appropriately changed depending on the shape of the workpiece to be welded. In the present embodiment, as an example, a case where the storage unit 41 stores the first to sixth movement reference positions will be described.

The "movement mode" refers to information indicating how the robot hand 31 of the welding robot 30 moves. In the present embodiment, the storage unit 41 is configured to store a linear movement mode and a curved movement mode as movement modes.

The movement mode may be appropriately changed depending on the shape of the workpiece to be welded. In the present embodiment, as an example, the movement mode reaching the fourth movement reference position from the second movement reference position through the third movement reference position is the curved movement mode, and the case where other movement modes are linear movement modes will be described.

The "welding start position" is one of the movement reference positions at which the welding machine 10 starts welding. In the present embodiment, the storage unit 41 is configured to store at least a first welding start position and a second welding start position as the welding start positions.

The number of welding start positions may be appropriately changed depending on the shape of the workpiece to be welded. Therefore, the storage unit 41 may store only the first welding start position as the welding start position, or it may store the first and second welding start positions along with an additional welding start position (for example, a third welding start position). In the present embodiment, as an example, the case where the storage unit 41 stores the first and second welding start positions will be described. Specifically, the case where the first welding start position is the second movement reference position and the second welding start position is the fourth movement reference position will be described.

The "welding end position" is one of the movement reference positions at which the welding machine 10 finishes welding. This welding end position is stored in the storage unit 41 only when the welding mode is a continuous irradiation mode described later, and is not stored in the storage unit 41 when the welding mode is a spot irradiation (spot welding) mode described later. In the present embodiment, as an example, the case where the welding end position is the fifth movement reference position will be described.

The "welding mode" refers to information indicating how the welding portions of the plurality of workpieces are to be welded. In the present embodiment, the storage unit 41 is configured to store the continuous irradiation mode from the welding start position to the welding end position as the welding mode, and the spot irradiation mode at the welding start position. In the present embodiment, as an example, the case where the welding mode at the first welding start position is the spot irradiation mode, and the welding mode at the second welding start position is the continuous irradiation mode will be described.

The operation information of the welding robot 30 stored in the storage unit 41 is transmitted to the weld processing program setting device 50 and is displayed on a program creation condition setting screen 51a of the weld processing program setting device 50 described later.

In addition, the storage unit 41 is configured to store the weld processing program created by the program creation unit 42 and a weld processing condition list L2 acquired from the weld processing program setting device 50 as described later. Specifically, the storage unit 41 is configured to store the weld processing program in association with the weld processing condition list L2 generated when the program creation conditions of the weld processing program are set in the weld processing program setting device 50. Storing the weld processing program in association with the weld processing condition list L2 in the storage unit 41 provides the advantage of allowing the weld processing to be performed again based on past weld processing programs and conditions.

The program creation unit 42 is configured to create the weld processing program based on the program creation conditions acquired from the weld processing program setting device 50. Specifically, the program creation unit 42 is configured to create the weld processing program based on the operation information of the welding robot 30 and the weld processing conditions of the welding machine 10 included in the program creation conditions.

The robot control unit 43 is configured to control the welding robot 30 based on the weld processing program stored in the storage unit 41. The operation steps executable by the robot control unit 43 (the configuration of the robot control unit 43) will be described later.

The robot control device 40 according to the present embodiment may be arranged independently of the welding robot 30, or may be formed as an integral unit or integrally with the welding robot 30.

### [Configuration of Weld Processing Program Setting Device]

The weld processing program setting device 50 is, for example, a personal computer or a tablet terminal. In the present embodiment, the weld processing program setting device 50 is a tablet terminal that can be held and transported by the operator. Specifically, as illustrated in Figure 1, the weld processing program setting device 50 includes: a display unit 51 configured to display the program creation condition setting screen 51a for setting program creation conditions of the weld processing program, including the operation information of the welding robot 30 capable of holding the welding torch 11 of the welding machine 10 and the weld processing conditions of the welding machine 10; and a storage unit 52 (weld processing storage unit) that stores a plurality of weld processing conditions.

As illustrated in Figure 1, the weld processing program setting device 50 includes a weld processing control unit 53 capable of controlling at least the welding machine 10 based on the weld processing program. That is, the weld processing program setting device 50 according to the present embodiment also functions as a weld processing control device capable of controlling at least the welding machine 10 based on the weld processing program.

In the present embodiment, it has been described that the weld processing program setting device 50 functions as a weld processing control device; however, the invention is not limited thereto, and the weld processing program setting device 50 and the weld processing control device may be configured as independent devices, respectively. That is, the weld processing system 1 may include the weld processing program setting device 50 configured to set the program creation conditions for the weld processing program; and the weld processing control device including the weld processing control unit 53 configured to control at least the welding machine 10 based on the weld processing program created based on the program creation conditions set by the weld processing program setting device 50.

The display unit 51 is a display capable of displaying various types of information. In the present embodiment, the display unit 51 is a touch panel capable of displaying various types of information and accepting an input operation by the operator. That is, the display unit 51 also functions as an operation section that accepts the input operation by the operator. In the present embodiment, the display unit 51 and the operation section are described as being configured as a single unit; however, the invention is not limited thereto, and the operation section is, for example, composed of a keyboard and a mouse, and may be configured independently of the display unit 51.

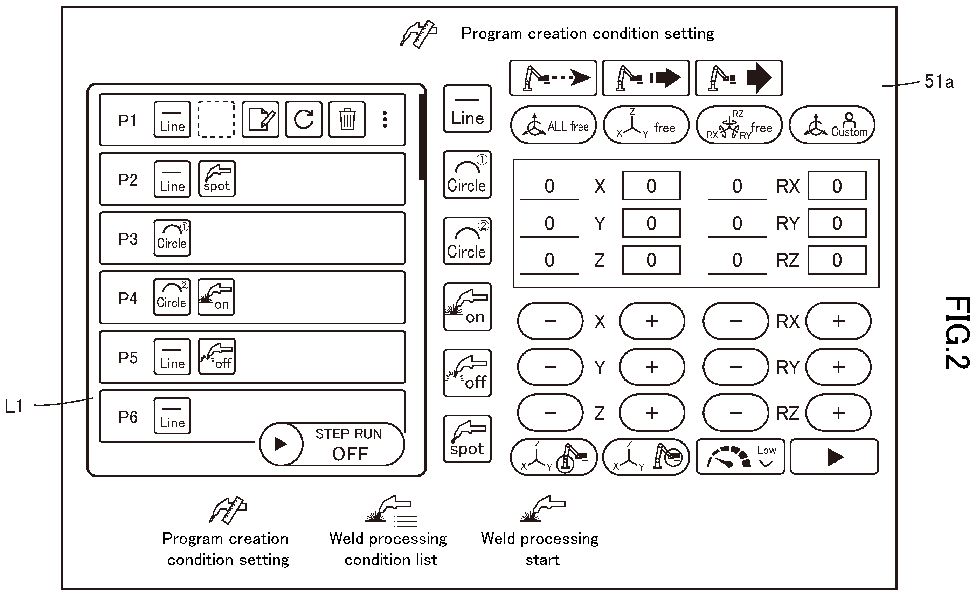

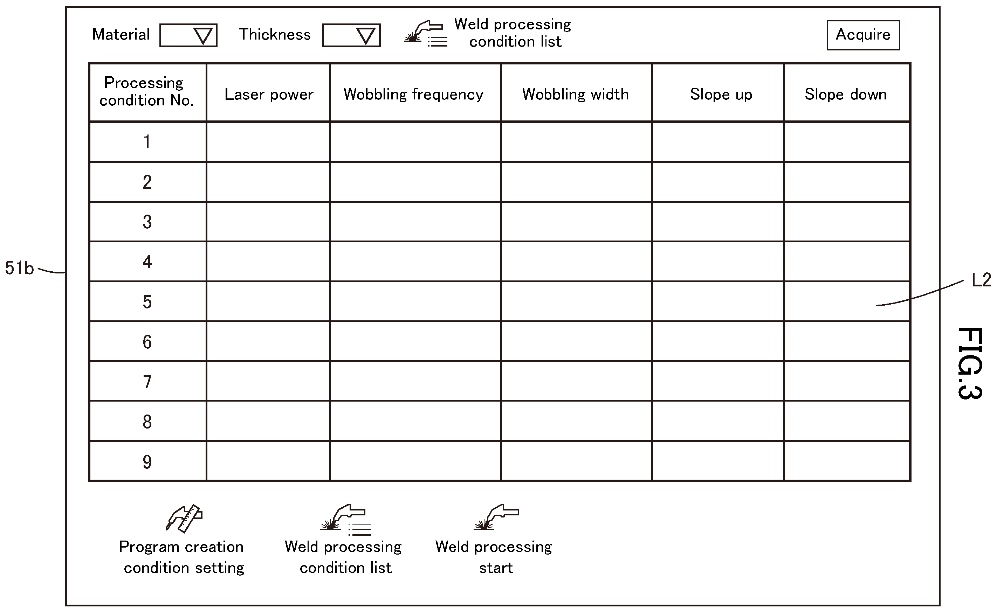

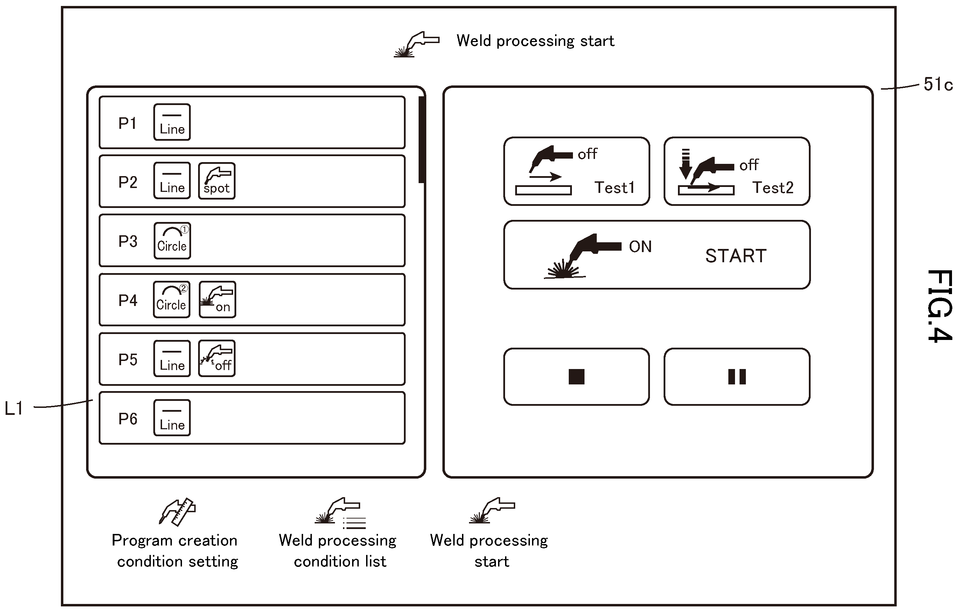

Figure 2 is a diagram showing the program creation condition setting screen. Figure 3 is a diagram showing the weld processing condition list screen. Figure 4 is a diagram showing a weld processing start screen.

As illustrated in Figures 2 to 4, the display unit 51 is configured to display the program creation condition setting screen 51a for setting weld processing program creation conditions, a weld processing condition list screen 51b that allows creation and editing of the weld processing condition list L2, and a weld processing start screen 51c for starting weld processing.

At the bottom of the program creation condition setting screen 51a, weld processing condition list screen 51b, and weld processing start screen 51c, an icon of "program creation condition setting" corresponding to the program creation condition setting screen 51a, an icon of "weld processing condition list" corresponding to the weld processing condition list screen 51b and an icon of "weld processing start" corresponding to the weld processing start screen 51c are displayed. The display unit 51 is then configured to display the screen corresponding to the icon selected by the operator from the "program creation condition setting" icon, the "weld processing condition list" icon and the "weld processing start" icon. For example, when the operator selects the "program creation condition setting" icon, the display unit 51 is configured to display the program creation condition setting screen 51a.

The term "icon" herein refers to a graphic or pictogram indicating predetermined information.

As illustrated in Figure 2, the program creation condition setting screen 51a is configured to display the operation information of the welding robot 30 that is acquired from the robot control device 40. In the present embodiment, the program creation condition setting screen 51a is configured to display the weld processing process list L1 showing the operation information of the welding robot 30 acquired from the robot control device 40 as weld processing processes. This configuration has the advantage of enabling the operator to visually recognize the operation information of the welding robot 30 more easily.

As illustrated in Figure 2, the weld processing process list L1 includes an item of "P". Here, the item "P" in the weld processing process list L1 indicates the movement reference positions of the welding robot 30 that are included in the operation information of the welding robot 30 acquired from the robot control device 40. In the present embodiment, the operation information of the welding robot 30 acquired from the robot control device 40 includes the first to sixth movement reference positions as the movement reference positions of the welding robot 30, and thus the program creation condition setting screen 51a displays "P1" to "P6" items. Accordingly, the number of "P" items displayed on the program creation condition setting screen 51a corresponds to the number of movement reference positions of the welding robot 30 included in the operation information of the welding robot 30 acquired from the robot control device 40.

The screen is configured to display, in each "P" item in the weld processing process list L1, the movement mode of the welding robot 30 included in the operation information of the welding robot 30 acquired from the robot control device 40. Specifically, the program creation condition setting screen 51a is configured to display the linear movement mode as a "Line" icon and the curved movement mode as a "Circle" icon among the movement modes of the welding robot 30 included in the operation information of the welding robot 30 acquired from the robot control device 40.

In the present embodiment, the operation information of the welding robot 30 acquired from the robot control device 40 includes information indicating that the movement mode reaching the fourth movement reference position from the second movement reference position through the third reference position is the curved movement mode, while other movement modes are linear movement modes, so that the "Line" icon is displayed in the "P1", "P2", "P5", and "P6" items, a "Circle1" icon is displayed in the "P3" item, and a "Circle2" icon is displayed in the "P4" item.

The screen is configured to display, in each "P" item in the weld processing process list L1, the welding start position, welding end position, and welding mode included in the operation information of the welding robot 30 acquired from the robot control device 40. Specifically, the program creation condition setting screen 51a is configured to display the welding start position included in the operation information of the welding robot 30 acquired from the robot control device 40 as an "on" or "spot" icon, and the welding end position as an "off" icon. Additionally, the program creation condition setting screen 51a is configured to display the continuous irradiation mode as an "on" icon, and the spot irradiation mode as a "spot" icon in the welding mode included in the operation information of the welding robot 30 acquired from the robot control device 40.

In the present embodiment, the operation information of the welding robot 30 acquired from the robot control device 40 includes information indicating that the first welding start position is the second movement reference position and that the welding mode at the first welding start position is the spot irradiation mode, so that the "spot" icon is displayed in the "P2" item. Furthermore, in the present embodiment, the operation information of the welding robot 30 acquired from the robot control device 40 includes information indicating that the second welding start position is the fourth movement reference position, the welding end position is the fifth movement reference position, and the welding mode at the second welding start position is the continuous irradiation mode, so that the "on" icon is displayed in the "P4" item, and the "off" icon is displayed in the "P5" item.

The program creation condition setting screen 51a is configured to allow detailed conditions related to weld processing to be set for each piece of operation information of the welding robot 30 ("movement mode", "welding start position", "welding end position", and "welding mode") set in each "P" item in the weld processing process list L1. Specifically, the program creation condition setting screen 51a allows detailed conditions related to weld processing to be set for each icon ("Line," "Circle1", "Circle2", "spot", "on", or "off") displayed in the weld processing process list L1.

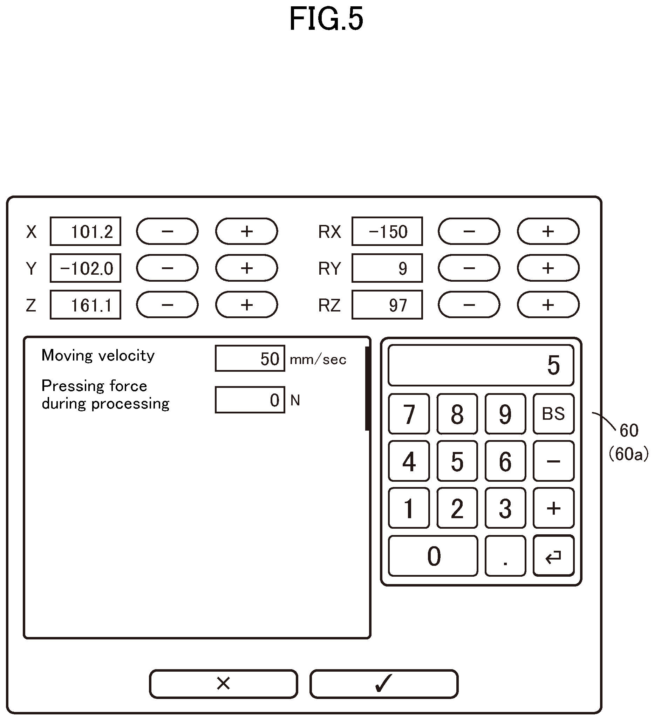

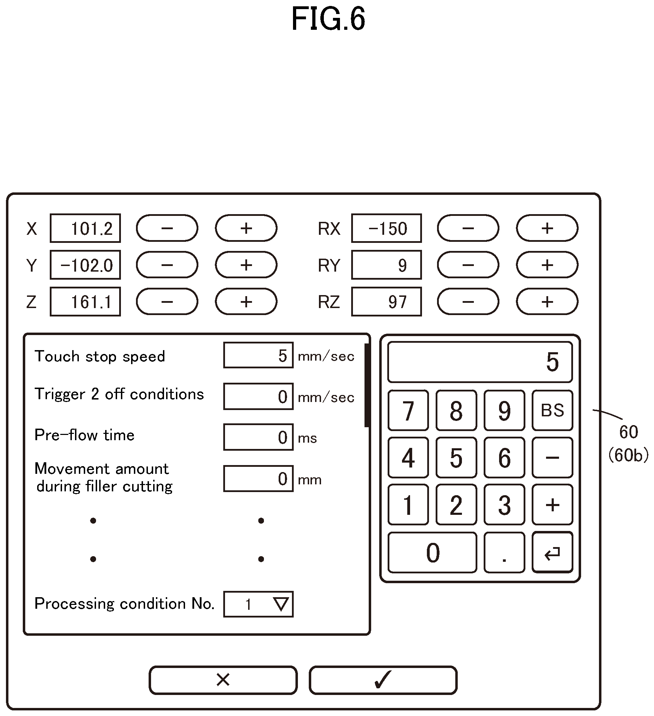

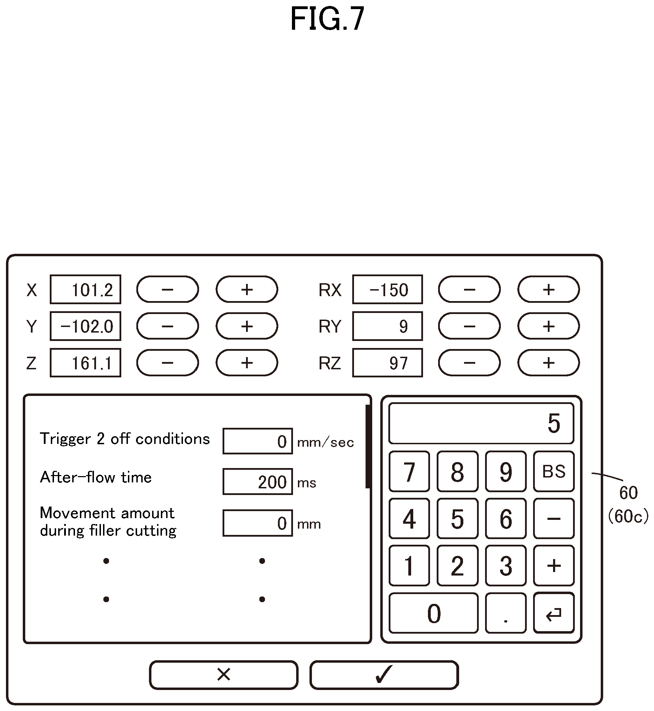

Figure 5 is a diagram showing a linear movement condition setting screen displayed when the "Line" icon is selected. Figure 6 is a diagram showing a spot irradiation condition setting screen displayed when the "spot" icon is selected. Figure 7 is a diagram showing a welding end condition setting screen displayed when the "off" icon is selected.

As shown in Figures 5 to 7, the program creation condition setting screen 51a is configured to display a detailed condition setting screen 60 that allows detailed conditions related to weld processing to be set when the icons displayed in the weld processing process list L1 are pressed by the operator. Additionally, the program creation condition setting screen 51a is configured to display a different detailed condition setting screen 60 corresponding to the icon selected by the operator.

Here, when the operator selects the "Line" icon on the program creation condition setting screen 51a, the linear movement condition setting screen 60a (see Figure 5) is displayed, and when the operator selects the "Circle1" or "Circle2" icon, a curved movement condition setting screen (not shown) is displayed. Furthermore, when the operator selects the "spot" icon on the program creation condition setting screen 51a, a spot irradiation condition setting screen 60b (see Figure 6) is displayed, and when the operator selects the "on" icon, a continuous irradiation condition setting screen (not shown) is displayed. Furthermore, when the operator selects the "off" icon on the program creation condition setting screen 51a, a welding end condition setting screen 60c (see Figure 7) is displayed.

In the present embodiment, as an example, conditions that can be set on the linear movement condition setting screen 60a, the spot irradiation condition setting screen 60b, and the welding end condition setting screen 60c will be described.

As illustrated in Figure 5, the linear movement condition setting screen 60a is configured to allow setting of conditions such as the moving velocity of the welding robot 30 and a pressing force during processing. As illustrated in Figure 6, the spot irradiation condition setting screen 60b is configured to allow setting of conditions such as a touch stop speed, trigger 2 OFF conditions, pre-flow time, and movement amount during filler cutting, as well as weld processing conditions for performing weld processing with the welding machine 10. As illustrated in Figure 7, the welding end condition setting screen 60c is configured to allow setting of conditions such as trigger 2 OFF conditions, after-flow time, and movement amount during filler cutting.

Thus, the program creation condition setting screen 51a according to the present embodiment has the advantage of high convenience because it allows detailed conditions related to weld processing to be set for each piece of operation information of the welding robot 30 set in each "P" item of the weld processing process list L1.

With respect to the condition items displayed on the linear movement condition setting screen 60a, the curved movement condition setting screen, the spot irradiation condition setting screen 60b, the continuous irradiation condition setting screen, and the welding end condition setting screen 60c, the operator can freely set any item.

Furthermore, weld processing conditions can only be set on the spot irradiation condition setting screen 60b or the continuous irradiation condition setting screen. In other words, the operator can set weld processing conditions only when selecting the "spot" icon or the "on" icon.

Thus, the program creation condition setting screen 51a according to the present embodiment is configured to display the operation information of the welding robot 30 and to allow setting of weld processing conditions of the welding machine 10 through the spot irradiation condition setting screen 60b or the continuous irradiation condition setting screen. Specifically, the program creation condition setting screen 51a is configured to allow weld processing conditions to be set for each of the welding start positions (the first and second welding start positions in the embodiment). Therefore, the operator can set different weld processing conditions for each welding start position.

The spot irradiation condition setting screen 60b and the continuous irradiation condition setting screen are configured to allow selection of predetermined weld processing conditions from among a plurality of weld processing conditions stored in the storage unit 52. In the present embodiment, the spot irradiation condition setting screen 60b and the continuous irradiation condition setting screen are configured to allow selection of predetermined weld processing conditions from the weld processing condition list L2 stored in the storage unit 52 as will be described later. Specifically, the spot irradiation condition setting screen 60b and the continuous irradiation condition setting screen are configured to display a pull-down menu that allows selection of a processing condition number from the weld processing condition list L2 stored in the storage unit 52, enabling desired weld processing conditions to be selected from that pull-down menu. For example, if processing condition number "1" is selected from the pull-down menu, the weld processing conditions corresponding to the processing condition number "1" in the weld processing condition list L2 stored in the storage unit 52 are set.

Thus, the program creation condition setting screen 51a according to the present embodiment is configured to allow selection of predetermined weld processing conditions from among the plurality of weld processing conditions stored in the storage unit 52 through the spot irradiation condition setting screen 60b or the continuous irradiation condition setting screen. Specifically, the program creation condition setting screen 51a is configured to allow selection of predetermined weld processing conditions from the weld processing condition list L2 stored in the storage unit 52 through the spot irradiation condition setting screen 60b or the continuous irradiation condition setting screen.

The program creation conditions set on the program creation condition setting screen 51a are transmitted to the robot control device 40 along with the weld processing condition list L2 created during setting of the program creation conditions. As described above, the program creation unit 42 of the robot control device 40 then creates a weld processing program based on the program creation conditions acquired from the weld processing program setting device 50, and the storage unit 41 of the robot control device 40 stores the weld processing program and the weld processing condition list L2 in association with each other.

As illustrated in Figure 3, the weld processing condition list screen 51b is configured to display the weld processing condition list L2. The weld processing condition list L2 includes items such as processing condition number, laser power, wobbling frequency, wobbling width, slope up, and slope down. In the present embodiment, information set for each of the items of laser power, wobbling frequency, wobbling width, slope up, and slope down serves as the weld processing conditions. The items in the weld processing condition list L2 are not limited thereto, and the operator can freely set any item.

Furthermore, the weld processing condition list screen 51b is configured to allow setting of each item in the weld processing condition list L2 by executing at least one of the following modes (1) to (4).
(1) A mode in which the operator inputs information for each item in the weld processing condition list L2.
(2) A mode in which the operator presses the "Acquire" button displayed on the weld processing condition list screen 51b to acquire the weld processing conditions stored in the storage unit 21 from the welding machine control device 20, setting the information for each item in the weld processing condition list L2.
(3) A mode in which in each of pull-down menus for the material of the workpiece and the thickness of the workpiece displayed on the weld processing condition list screen 51b, the operator selects a predetermined material and thickness, thereby setting appropriate information for the selected material and thickness in each item of the weld processing condition list L2.
(4) A mode in which the operator presses a button corresponding to any of the processing condition numbers (1 to 9 in Figure 3) displayed on the weld processing condition list screen 51b, to acquire a condition name list of the weld processing conditions stored in the storage unit 21 from the welding machine control device 20. In the mode, the operator then selects a desired condition name from the condition name list, to set information for each item (i.e., the item of laser power, etc.) of the weld processing conditions corresponding to the processing condition number operated by the operator.

Furthermore, the weld processing condition list screen 51b is configured to allow the weld processing condition list L2 to be created for each weld processing program. Therefore, the weld processing condition list screen 51b is configured to allow a different weld processing condition list L2 to be created for each weld processing program.

As illustrated in Figure 4, the weld processing start screen 51c is configured to display at least the weld processing process list L1 set on the program creation condition setting screen 51a and a "START" button for starting the weld processing. When the "START" button displayed on the weld processing start screen 51c is pressed, a weld processing start notification is transmitted from the weld processing program setting device 50 to the robot control device 40. The robot control unit 43 of the robot control device 40 then executes operation steps based on the weld processing program.

The storage unit 52 is configured to store a plurality of weld processing conditions. In the present embodiment, the storage unit 52 is configured to store the weld processing condition list L2 created and edited on the weld processing condition list screen 51b. The storage unit 52 may store the weld processing condition list L2 only until the weld processing condition list L2 is transmitted to the robot control device 40, or it may store the weld processing condition list L2 even after the weld processing condition list L2 is transmitted to the robot control device 40.

The weld processing control unit 53 is configured to control the welding machine 10 based on the weld processing program created by the program creation unit 42 of the robot control device 40. Specifically, the weld processing control unit 53 is configured to change the settings of the weld processing conditions in the welding machine 10 in accordance with the welding start position during execution of the weld processing program.

In addition, even if the weld processing program includes an additional welding start position (for example, the third welding start position) in addition to the first and second welding start positions, the weld processing control unit 53 can execute similar control.

### [Operation steps executable by Welding Machine Control Unit, Robot Control Unit, and Weld processing Control Unit]

The welding machine control unit 22, robot control unit 43, and weld processing control unit 53 are configured to execute the following operation steps (1) to (8).
(1) The weld processing control unit 53 instructs the welding machine control unit 22 to change the settings of the weld processing conditions in the welding machine 10 to the weld processing conditions corresponding to the first welding start position.
(2) The welding machine control unit 22 changes the settings of the weld processing conditions in the welding machine 10 to the weld processing conditions corresponding to the first welding start position based on the instruction acquired from the weld processing control unit 53.
(3) The robot control unit 43 operates the welding robot 30 from the first welding start position and pauses the operation of the welding robot 30 at the second welding start position.
(4) The robot control unit 43 transmits, to the weld processing control unit 53, an operation pause notification indicating that the operation of the welding robot 30 has been paused.
(5) The weld processing control unit 53, after receiving the operation pause notification from the robot control unit 43, instructs the welding machine control unit 22 to change the settings of the weld processing conditions in the welding machine 10 to weld processing conditions corresponding to the second welding start position.
(6) The welding machine control unit 22 changes the settings of the weld processing conditions in the welding machine 10 to the weld processing conditions corresponding to the second welding start position based on the instruction acquired from the weld processing control unit 53.
(7) The weld processing control unit 53 transmits, to the robot control unit 43, a condition change notification indicating that the setting of the weld processing conditions in the welding machine 10 is changed.
(8) The robot control unit 43, after receiving the condition change notification from the weld processing control unit 53, resumes the operation of the welding robot 30.

As a result of this configuration, it becomes possible to weld a plurality of workpieces while the weld processing conditions are changed during execution of the weld processing program.

### [Weld Processing Method]

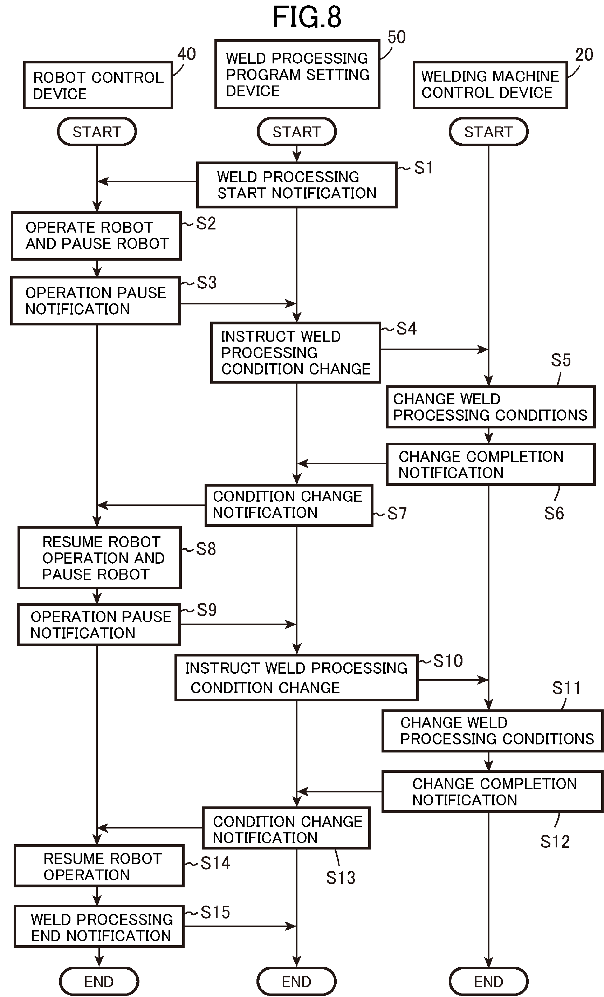

Figure 8 is a flowchart showing an example of a weld processing process.

Next, with reference to Figure 8, the weld processing method using the weld processing system 1 according to the present embodiment will be described. Hereinafter, the case of performing weld processing based on the weld processing process list L1 shown in Figure 4 will be described, and the case where the weld processing conditions differ between the first welding start position and the second welding start position will be described.

When the operator presses the "START" button displayed on the weld processing start screen 51c, the weld processing program setting device 50 transmits a weld processing start notification to the robot control device 40 (S1).

When the robot control device 40 acquires the weld processing start notification from the weld processing program setting device 50, the robot control unit 43 operates the welding robot 30 from the movement start position and pauses the operation of the welding robot 30 at the first welding start position, based on the weld processing program stored in the storage unit 41 (S2). Specifically, the robot control unit 43 causes the welding robot 30 to execute the following operations (1) to (3).
(1) A linearly moving operation from the movement start position toward the first movement reference position.
(2) A linearly moving operation from the first movement reference position toward the second movement reference position.
(3) A pausing operation at the first movement reference position (the first welding start position).

The robot control unit 43, after pausing the operation of the welding robot 30, transmits, to the weld processing control unit 53, the operation pause notification indicating that the operation of the welding robot 30 has been paused (S3).

The weld processing control unit 53, after acquiring the operation pause notification from the robot control unit 43, instructs the welding machine control unit 22 to change the settings of the weld processing conditions in the oscillator 12 to the weld processing conditions corresponding to the first welding start position (S4).

The welding machine control unit 22, after acquiring an instruction from the weld processing control unit 53, changes the settings of the weld processing conditions in the oscillator 12 to the weld processing conditions corresponding to the first welding start position based on the instruction acquired from the weld processing control unit 53 (S5), and transmits, to the weld processing control unit 53, a change completion notification indicating that the change of the weld processing conditions has been completed (S6).

The weld processing control unit 53, after acquiring a change completion notification from the welding machine control unit 22, transmits, to the robot control unit 43, a condition change notification indicating that the setting of the weld processing conditions in the welding machine 10 is changed (S7). The robot control unit 43, after acquiring the condition change notification from the weld processing control unit 53, resumes the operation of the welding robot 30 and pauses the operation of the welding robot 30 at the second welding start position, based on the weld processing program (S8). Specifically, the robot control unit 43 causes the welding robot 30 to execute the following operations (1) to (3).
(1) An operation to execute spot irradiation at the second movement reference position (the first welding start position).
(2) An operation to move in a curve from the second movement reference position through the third movement reference position until reaching the fourth movement reference position.
(3) An operation to pause at the fourth movement reference position (the second welding start position).

The robot control unit 43, after pausing the operation of the welding robot 30, transmits, to the weld processing control unit 53, an operation pause notification indicating that the operation of the welding robot 30 has been paused (S9).

The weld processing control unit 53, after acquiring the operation pause notification from the robot control unit 43, instructs the welding machine control unit 22 to change the settings of the weld processing conditions in the oscillator 12 to the weld processing conditions corresponding to the second welding start position (S10).

The welding machine control unit 22, after acquiring the instruction from the weld processing control unit 53, changes the settings of the weld processing conditions in the oscillator 12 to the weld processing conditions corresponding to the second welding start position based on the instruction acquired from the weld processing control unit 53 (S11), and transmits, to the weld processing control unit 53, a change completion notification indicating that the changing of the weld processing conditions is completed (S12).

The weld processing control unit 53, after acquiring the change completion notification from the welding machine control unit 22, transmits, to the robot control unit 43, a condition change notification indicating that the settings of the weld processing conditions in the welding machine 10 have been changed (S13). The robot control unit 43, after acquiring the condition change notification from the weld processing control unit 53, resumes the operation of the welding robot 30 based on the weld processing program (S14). Specifically, the robot control unit 43 causes the welding robot 30 to execute the following operations (1) and (2).
(1) An operation to move linearly from the fourth movement reference position toward the fifth movement reference position, and to execute continuous irradiation from the fourth movement reference position (the second welding start position) to the fifth movement reference position (the welding end position).
(2) An operation to move linearly from the fifth movement reference position to the sixth movement reference position (the movement end position), and to end the weld processing.

The above steps enable welding of a plurality of workpieces while changing the weld processing conditions during execution of the weld processing program. Thereafter, at the end of the weld processing, the robot control unit 43 transmits, to the weld processing control unit 53, a weld processing end notification indicating that the weld processing has ended (S15).

In the weld processing system 1 according to the present embodiment, the display unit 51 is configured to display a weld processing program list (not shown) showing all weld processing programs stored in the storage unit 41 of the robot control device 40, allowing the operator to select a desired weld processing program from the weld processing program list, so that past weld processing program is displayed on the program creation condition setting screen 51a, enabling editing and reexecution of the past weld processing program.

### [Advantages of Weld Processing Program Setting Device according to the present Embodiment]

Thus, the weld processing program setting device 50 according to the present embodiment includes the display unit 51 configured to display the program creation condition setting screen 51a for setting the program creation conditions of the weld processing program that includes the operation information of the welding robot 30 configured to hold the welding torch 11 of the welding machine 10, and the weld processing conditions of the welding machine 10, wherein the program creation condition setting screen 51a is configured to display the operation information and to allow setting of the weld processing conditions, the operation information includes the movement path of the welding robot 30 and the welding start position in the movement path, the welding start position includes at least the first welding start position and the second welding start position, and the program creation condition setting screen 51a is configured to allow the weld processing conditions to be set for each of the first welding start position and the second welding start position.

According to the weld processing program setting device 50 including such a configuration, when setting the program creation conditions of the weld processing program, the weld processing conditions can be set for each of the first welding start position and the second welding start position, thereby providing the advantage of enabling the weld processing conditions to be changed during execution of the weld processing program. Moreover, unlike conventional welding devices, there is no need to change the settings of the weld processing conditions in the welding machine 10 each time before execution of each weld processing program, providing a further advantage of improving the work efficiency of the operator. Furthermore, unlike the welding device described in Patent Literature 1, since the welding torch 11 and the welding robot 30 are configured as separate components, it is possible to switch between robot welding using the welding robot 30 and handheld welding without using the welding robot 30 depending on the workpiece and welding mode, which also provides the advantage of high versatility.

Thus, the weld processing program setting device 50 according to the present embodiment further includes the storage unit 52 that stores a plurality of weld processing conditions, and the program creation condition setting screen 51a is configured to allow predetermined weld processing conditions to be selected from among the plurality of weld processing conditions stored in the storage unit 52. The weld processing program setting device 50 including such a configuration provides the advantage of facilitating setting of the weld processing conditions.

Furthermore, in the weld processing program setting device 50 according to the present embodiment, the display unit 51 is configured to display a weld processing condition list screen 51b configured to allow creation of the weld processing condition list L2, the weld processing condition list screen 51b is configured to allow the weld processing condition list L2 to be created for each weld processing program, the storage unit 52 is configured to store the weld processing condition list L2 created on the weld processing condition list screen 51b, and the program creation condition setting screen 51a is configured to allow the predetermined weld processing conditions to be selected from the weld processing condition list L2 stored in the storage unit 52.

In conventional welding devices, after a weld processing program is executed, the weld processing program and the corresponding weld processing condition are stored in association with each other, making it possible to perform weld processing again based on past weld processing programs and weld processing conditions. In the conventional welding devices, however, a single weld processing condition list is created in the welding machine or control device, and when executing the weld processing program, the predetermined weld processing conditions are selected from the weld processing condition list to set the weld processing conditions for the weld processing program. Therefore, for example, if the contents of the weld processing condition list stored in the welding machine or the control device are changed, the contents of the weld processing conditions stored in association with past executed weld processing programs may also be altered. This may cause problems when weld processing is performed again based on those past weld processing programs and conditions. In this regard, the weld processing program setting device 50 according to the present embodiment creates the weld processing condition list L2 for each weld processing program on the weld processing condition list screen 51b, so that changes to the contents of one weld processing condition list L2 do not affect the contents of other weld processing condition lists L2. This provides the advantage of enabling the weld processing to be performed again based on the past weld processing programs and conditions.

In addition, the weld processing program setting device 50 according to the present embodiment includes the weld processing control unit 53 configured to control at least the welding machine 10 based on the weld processing program, and the weld processing control unit 53 is configured to change the settings of the weld processing conditions in the welding machine 10 in accordance with the welding start position during execution of the weld processing program. The weld processing program setting device 50 including such a configuration provides the advantage of enabling the weld processing conditions to be changed during execution of the weld processing program. Moreover, unlike conventional welding devices, there is no need to change the settings of the weld processing conditions in the welding machine 10 each time before execution of each weld processing program, providing a further advantage of improving the work efficiency of the operator.

### [Modifications]

The weld processing program setting device, weld processing control device, and weld processing system according to the present invention are not limited to the above-described embodiment and can be variously modified without departing from the technical concept of the present invention.

For example, in the above-described embodiment, it has been described that the spot irradiation condition setting screen 60b and the continuous irradiation condition setting screen are configured to allow predetermined weld processing conditions to be selected from among the plurality of weld processing conditions stored in the storage unit 52; however, the invention is not limited thereto. For example, in each of the spot irradiation condition setting screen 60b and the continuous irradiation condition setting screen, a mode similar to the mode of setting each item in the weld processing condition list L2 of the weld processing condition list screen 51b may be executed. Moreover, on the program creation condition setting screen 51a, modes may be executed similarly to the setting mode of the weld processing conditions in the spot irradiation condition setting screen 60b and the continuous irradiation condition setting screen, as well as the setting mode of each item in the weld processing condition list L2 of the weld processing condition list screen 51b.

Additionally, in the above-described embodiment, it has been described that the program creation condition setting screen 51a is configured to allow detailed conditions related to weld processing to be set for each piece of operation information of the welding robot 30 that is set for each "P" item in the weld processing process list L1; however, the invention is not limited thereto. For example, the program creation condition setting screen 51a may be configured to allow detailed conditions related to weld processing to be set for each "P" item in the weld processing process list L1. For example, the program creation condition setting screen 51a may be configured to display the detailed condition setting screen 60 when the 'P' item of the weld processing process list L1 is operated by the operator. In addition, the detailed condition setting screen 60 may be configured to allow detailed conditions to be set in accordance with the operation information of the welding robot 30 set to the "P" item operated by the operator.

Furthermore, in the embodiment described above, it has been described that the weld processing control unit 53 controls only the welding machine 10; however, the invention is not limited thereto, and the weld processing control unit 53 may control both the welding machine 10 and the welding robot 30. That is, in the embodiment described above, it has been described that the welding machine 10 is controlled by the weld processing control unit 53 via the welding machine control unit 22, and the welding robot 30 is controlled by the robot control unit 43, but the welding robot 30 may be controlled by the weld processing control unit 53 via the robot control unit 43.

Furthermore, in the embodiment described above, it has been described that the robot control device 40 includes the program creation unit 42; however the invention is not limited thereto, and the weld processing program setting device 50 may include the program creation unit 42. That is, the weld processing program may be created in the weld processing program setting device 50.

It is apparent from the claims that such modifications fall within the scope of the present invention.

### Reference Signs List

1: Weld processing system
10: Welding machine
11: Welding torch
12: Oscillator
20: Welding machine control device
21: Storage unit
22: Welding machine control unit
30: Welding robot
31: Robot hand
32: Robot arm
40: Robot control device
41: Storage unit
42: Program creation unit
43: Robot control unit
50: Weld processing program setting device
51: Display unit
51a: Program creation condition setting screen
51b: Weld processing condition list screen
51c: Weld processing start screen
52: Storage unit
53: Weld processing control unit
60: Detailed condition setting screen
60a: Linear movement condition setting screen
60b: Spot irradiation condition setting screen
60c: Welding end condition setting screen
L1: Weld processing process list
L2: Weld processing condition List
NW: Communication network

## Claims

1. A weld processing program setting device, comprising:
a display unit configured to display a program creation condition setting screen for setting program creation conditions of a weld processing program that includes operation information of a welding robot configured to hold a welding torch of a welding machine, and weld processing conditions of the welding machine, wherein
the program creation condition setting screen is configured to display the operation information and to allow setting of the weld processing conditions,
the operation information includes a movement path of the welding robot and a welding start position in the movement path,
the welding start position includes at least a first welding start position and a second welding start position, and
the program creation condition setting screen is configured to allow the weld processing conditions to be set for each of the first welding start position and the second welding start position.

2. The weld processing program setting device according to claim 1, further comprising:
a storage unit that stores a plurality of weld processing conditions, wherein
the program creation condition setting screen is configured to allow predetermined weld processing conditions to be selected from among the plurality of weld processing conditions stored in the storage unit.

3. The weld processing program setting device according to claim 2, wherein the display unit is configured to display a weld processing condition list screen configured to allow creation of a weld processing condition list,
the weld processing condition list screen is configured to allow the weld processing condition list to be created for each weld processing program,
the storage unit is configured to store the weld processing condition list created on the weld processing condition list screen, and
the program creation condition setting screen is configured to allow predetermined weld processing conditions to be selected from the weld processing condition list stored in the storage unit.

4. A weld processing control device, comprising:
a weld processing control unit configured to control at least the welding machine based on the weld processing program created based on the program creation conditions set by the weld processing program setting device according to any one of claims 1 to 3, wherein
the weld processing control unit is configured to change the settings of the weld processing conditions in the welding machine in accordance with the welding start position during execution of the weld processing program.

5. A weld processing system, comprising:
a program creation unit configured to create the weld processing program based on the program creation conditions set by the weld processing program setting device according to any one of claims 1 to 3;
a welding machine including a welding torch;
a welding robot configured to hold the welding torch; and
a weld processing control unit configured to control at least the welding machine based on the weld processing program created by the program creation unit, wherein
the weld processing control unit is configured to change the settings of the weld processing conditions in the welding machine in accordance with the welding start position during execution of the weld processing program.

6. The weld processing system according to claim 5, further comprising:
a welding machine control unit configured to control the welding machine; and
a robot control unit configured to control the welding robot based on the weld processing program, wherein
the weld processing control unit instructs the welding machine control unit to change the settings of the weld processing conditions in the welding machine to the weld processing conditions corresponding to the first welding start position,
the welding machine control unit changes the settings of the weld processing conditions in the welding machine to the weld processing conditions corresponding to the first welding start position based on the instruction acquired from the weld processing control unit,
the robot control unit operates the welding robot from the first welding start position and pauses the operation of the welding robot at the second welding start position,
the robot control unit transmits, to the weld processing control unit, an operation pause notification indicating that the operation of the welding robot has been paused,
the weld processing control unit, after receiving the operation pause notification from the robot control unit, instructs the welding machine control unit to change the settings of the weld processing conditions in the welding machine to the weld processing conditions corresponding to the second welding start position,
the welding machine control unit changes the settings of the weld processing conditions in the welding machine to the weld processing conditions corresponding to the second welding start position based on the instruction acquired from the weld processing control unit,
the weld processing control unit transmits, to the robot control unit, a condition change notification indicating that the settings of the weld processing conditions in the welding machine have been changed, and
the robot control unit, after receiving the condition change notification from the weld processing control unit, resumes the operation of the welding robot.
